# EUROPÄISCHE PATENTSCHRIFT

(11) **EP 1 943 009 B1**
(45) Veröffentlichungstag und Bekanntmachung des Hinweises auf die Patenterteilung: **09.06.2010**
(21) Anmeldenummer: 06793376.2
(22) Anmeldetag: 08.09.2006
(51) Int. Cl.: B01F 3/08, B01F 7/00, B01F 7/16, B01F 13/10, B01F 15/00, B01F 15/04, B29C 45/18, B29C 47/10

(54) **VORRICHTUNG UND VERFAHEREN ZUM MISCHEN VON FLÜSSIGFARBEN SOWIE VERWENDUNG EINES SOLCHEN VERFAHRENS ZUM EINFÄRBEN VON KUNSTSTOFFEN**
APPARATUS AND METHOD FOR MIXING LIQUID COLOURS AND USE OF SUCH A METHOD FOR COLOURING PLASTICS
DISPOSITIF ET PROCEDE POUR MELANGER DES COLORANTS LIQUIDES ET UTILISATION D'UN TEL PROCEDE POUR COLORER DES MATIERES PLASTIQUES

(30) Priorität: 17.10.2005 DE 102005049926
(43) Veröffentlichungstag der Anmeldung: 16.07.2008
(73) Patentinhaber: Evonik Degussa GmbH, 45128 Essen (DE)
(72) Erfinder: BECHT, Simon, 61197 Florstadt (DE); KLUGE, Andreas, 63179 Obertshausen (DE); WEELEN, Maurice, NL-6287 Av Eys (NL); WELP, Martin, NL-48493 Wettlingen (NL)
(86) Internationale Anmeldenummer: PCT/EP2006/066194
(87) Internationale Veröffentlichungsnummer: WO 2007/045529

(56) Entgegenhaltungen:
- EP-A1- 0 824 036
- EP-A2- 1 410 841
- WO-A-02/076609
- WO-A2-2006/024962
- DE-A1- 10 242 100
- DE-A1- 19 728 733
- JP-A- 10 006 363
- SU-A1- 925 637
- US-A- 4 457 258
- US-A1- 2003 004 229
- US-A1- 2003 198 125
- NETTELNBREKER H-J ET AL: "FARBE BEIM AUFBEREITEN VON KUNSTSTOFFEN AUTOMATISIERT MESSEN UND KORRIGIEREN" KUNSTSTOFFE, CARL HANSER VERLAG, MUNCHEN, DE, Bd. 80, Nr. 7, Juli 1990 (1990-07), Seiten 777-781, XP000159975 ISSN: 0023-5563

## Beschreibung

Die Erfindung betrifft einen Mischer für Flüssigfarben und ein mit diesem Mischer durchgeführtes Verfahren zum Mischen von Flüssigfarben, das sich zum bedarfsgerechten Dosieren von Flüssigfarben in kunststoffverarbeitende Maschinen eignet.

Bei der Verarbeitung von Kunststoffen über Kunststoffschmelzen erfolgt die Einfärbung des Kunststoffs üblicherweise durch sogenannte Masterbatches. Masterbatches sind Kunststoffgranulate mit einem hohen Gehalt an Farbstoff, die dem Kunststoff bei der Verarbeitung über die Schmelze zugesetzt werden, um den Kunststoff einzufärben. Die Verwendung von Masterbatches hat den Nachteil, dass für jeden Kunststofftyp und jede Farbe ein eigenes Masterbatch hergestellt und für die Kunststoffverarbeitung auf Lager gehalten werden muss. Kurzfristige Wechsel auf neue Farben oder Veränderungen des Farbtons sind nicht möglich, da jeweils ein neues Masterbatch!hergestellt werden muss.

An Stelle von Masterbatches können zur Einfärbung von Kunststoffen auch Flüssigfarben verwendet werden, wobei die Flüssigfarbe der den Kunststoff verarbeitenden Maschine entweder zusammen mit dem nicht gefärbten , Kunststoffgranulat zugeführt wird oder in der Maschine mit dem bereits aufgeschmolzenen Kunststoff gemischt wird. Bei diesen Verfahren wird eine für den gewünschten Farbton abgemischte Flüssigfarbe verwendet so dass für jede gewünschte Farbe eine entsprechende Flüssigfarbe hergestellt und auf Lager gehalten werden muss. Auch hier ist ein kurzfristiger Wechsel auf neue Farben oder eine Veränderungen des Farbtons nicht möglich, da jeweils eine neue Flüssigfarbe hergestellt werden muss.

In WO 02/087849 ist vorgeschlagen worden, mehrere Flüssigfarben getrennt einer kunststoffverarbeitenden Maschine zuzuführen und über eine rezeptgesteuerte Dosierung der Mengen der einzelnen Flüssigfarben Kunststoffe mit unterschiedlichen Farbtönen herzustellen. Dieses Verfahren hat jedoch den Nachteil, dass bei Rezepturen mit stark unterschiedlichen Mischungsverhältnissen der einzelnen Flüssigfarben auf vielen kunststoffverarbeitenden Maschinen keine ausreichend homogene Vermischung der Flüssigfarben mit dem Kunststoff erfolgt; so dass ungleichmäßig eingefärbte Produkte erhalten werden.

Deshalb besteht Bedarf nach einem Mischer und einem Mischverfahren, mit dem sich für die Einfärbung von Kunststoffen aus einzelnen Flüssigfarben nach Rezeptur auch bei stark unterschiedlichen Anteilen der einzelnen Flüssigfarben homogen gemischte Flüssigfarben herstellen lassen, wobei die Herstellung der Mischung unmittelbar vor der Verarbeitung des Kunststoffs entsprechend dem Bedarf der kunststoffverarbeitenden Maschine erfolgt. Der Mischer muss in der Lage sein, auch thixotrope Flüssigfarben, die erst ab einer bestimmten Scherbelastung fließen, zuverlässig zu vermischen.

WO 99/34905 offenbart einen Mischer zur Herstellung von Anstrichfarben, bei dem einzelne Flüssigfarben und ein oder mehrere Lackbasisstoffe in eine gemeinsamen Kammer des Mischers dosiert und in einem nachfolgenden Turbinenmischer gemischt werden, bevor die Mischung den Mischer verlässt. Für die Mischung von Flüssigfarben unterschiedlicher Viskosität und Dichte ohne Zusatz größerer Mengen eines Lackbasisstoffs, wie sie für die Einfärbung von Kunststoffen erforderlich ist, ist dieser Mischer jedoch wenig geeignet, da die Mischung der Flüssigfarben dann unvollständig bleibt.

US 3,664,638 offenbart statische Mischer zum Mischen von Flüssigkeiten, bei denen in einem Rohr hintereinander mehrere schraubenförmige Mischelemente mit jeweils abwechselndem Drehsinn angeordnet sind. Statische Mischer dieser Bauform sind dem Fachmann unter dem Namen Wendelmischer oder Kenics-Mischer bekannt und werden üblicherweise zum Mischen von reaktiven Komponenten bei der Herstellung von Zwei-Kömponenten-Kunststoffen oder Zwei-Komponenten-Klebern verwendet. '

Für die Herstellung von Zwei-Komponenten-Kunststoffen werden auch dynamische Mischer verwendet, bei denen die aus den Wendelmischern bekannten Mischelemente in einem Mischrohr rotieren. Bei diesen Mischern werden die beiden Komponenten wie bei den statischen Mischern dem Mischrohr an einem Ende axial zugeführt.

Die bekannten statischen Wendelmischer und die Mischer mit rotierendem Wendelmischelement mit axialer Zuführung der Komponenten eignen sich allerdings nicht zum Mischen von Flüssigfarben mit unterschiedlichem Fließverhalten, wie sie zum Einfärben von Kunststoffen verwendet werden, bei stark unterschiedlichen Mischverhältnissen. Bei unterschiedlicher Viskosität der zu mischenden Flüssigfarben kommt es beispielsweise zu einer ungleichmäßigen Einmischung der viskoseren Komponente, so dass Mischungen mit schwankendem Farbton erhalten werden. Ähnliche Probleme treten auch auf, wenn die Flüssigfarben unterschiedliche Dichten aufweisen oder eine oder mehrere der Flüssigfarben ein thixotropes Fließverhalten aufweisen.

JP-A 3-60727 offenbart einen statischen Mischer in der Bauweise von Wendelmischern, bei dem in der Wand des Mischrohrs Düsen angeordnet sind, um ein Fluid mit einem durch das Rohr strömendem Fluid zu mischen. Der Mischer soll eine hohe Mischwirkung aufweisen, wenn kleine Mengen eines Fluids über die Düsen in der Wand des Mischrohrs einem großen Fluidstrom zugemischt werden, der das Mischrohr durchfließt.

EP-A 0 090 257 offenbart einen Mischer für Mehrkomponentenkunststoffe, der eine Mischkammer mit einem in der Mischkammer rotierenden Kolben aufweist, wobei sich zwischen dem Kolben und der Mischkammer ein Scherspalt bildet. Die einzelnen Komponenten werden radial in den Scherspalt dosiert und verlassen den Mischer über eine dem Kolben entgegenliegende Austrittsöffnung. Der Mischer bewirkt eine laminare Strömung im Scherspalt und weist keine Einrichtungen auf, die den Inhalt des Scherspalts in die zur Austrittsöffnung entgegengesetzte Richtung bewegen.

WO 2006/024962 offenbart einen kosmetischen Farbapparat umfassend eine Farbmesseinheit zur Messung der Hautfarbe eines Individuums. Weiterhin wird eine Farbmischeinheit zur Mischung mehrerer Pigmente offenbart, die kosmetische Farbmischungen liefert.

DE 102 42 100 betrifft ein Verfahren zur kontinuierlichen Vermischung mindestens einer Polyolkomponente und mindestens einer Polyisocyanatkomponente in einem Rührermischer mit einem axial fördernden Rührer.

In DE 197 28 733 wird eine Spritzgießmaschine zum herstellen farbiger Spritzlinge, wobei die Spritzgießmaschine ein Spritzgießwerkzeug mit einer Spritzgießform und eine Spritzgießeinheit aufweist.

Die Aufgabe einer gleichmäßigen Mischung von Flüssigfarben auch bei stark unterschiedlichen Anteilen der einzelnen Flüssigfarben und unterschiedlichem Fließverhalten der Flüssigfarben lässt sich durch den erfindungsgemäßen Mischer und das mit dem Mischer durchgeführte Verfahren zum Mischen von Flüssigfarben lösen.

Gegenstand der Erfindung ist ein Mischer für Flüssigfarben, umfassend ein Mischrohr mit einer Austrittsöffnung am Ende des Mischrohrs, ein im Mischrohr um die Längsachse des Mischrohres drehbar angeordnetes Mischorgan mit mindestens zwei Mischelementen, wobei die Mischelemente des Mischorgans die Form von schraubenförmigen Wendeln mit abwechselnd entgegengesetztem Drehsinn aufweisen und bei gleicher Drehrichtung des Mischorgans ein Teil der Mischelemente den Inhalt des Mischers in Richtung der Austrittsöffnung und ein Teil der Mischelemente den Inhalt des Mischers in entgegengesetzter Richtung bewegen, und mindestens zwei Einlassöffnungen für Flüssigfarben, die in der zwischen den Enden des Mischrohrs liegenden Wand des Mischrohrs im Bereich des Mischorgans angeordnet sind und bei der Bewegung des Mischorgans an jeder der Einlassöffnungen mindestens ein Mischelement des Mischorgans in weniger als 1mm Abstand, vorzugsweise weniger als 0,5 mm Abstand, vorbeigeführt wird.

Gegenstand der Erfindung ist weiterhin ein Verfahren zum Mischen von Flüssigfarben, bei dem in dem erfindungsgemäßen Mischer mindestens zwei Flüssigfarben gemischt werden, wobei die Flüssigfarben dem Mischer über die Einlassöffnungen für Flüssigfarben zugeführt werden, während das Mischorgan um die Längsachse des Mischrohres bewegt wird und die gemischte Flüssigfarbe den Mischer über die Austrittsöffnung am Ende des Mischrohrs verlässt.

Gegenstand der Erfindung ist außerdem die Verwendung eines erfindugsgemäßen Verfahrens zum Einfärben von Kunststoffen, bei dem mindestens zwei Flüssigfarben mit dem erfindungsgemäßen Verfahren zum Mischen von Flüssigfarben bei volumetrischer Dosierung gemischt werden und die gemischte Flüssigfarbe direkt einer kunststoffverarbeitenden Maschine zugeführt wird.

Flüssigfarben im Sinne der Erfindung sind fließfähige Zubereitungen, die ein oder mehrere Pigmente in dispergierter Form und/oder einen oder mehrere Farbstoffe in gelöster Form enthalten. Die Flüssigfarben können flüssig oder pastös sein und umfassen auch thixotrope Zubereitungen, die erst fließen, wenn eine Scherkraft auf sie wirkt, die höher ist als ihre Fließgrenze. Vorzugsweise enthalten die Flüssigfarben bis zu 10 Gew.-%, insbesondere bis zu 5 Bzw.-% Pigmente.

Der erfindungsgemäße Mischer weist ein Mischrohr auf, an dessen Ende sich eine Austrittsöffnung für die gemischte Flüssigfarbe befindet. Das Mischrohr ist vorzugsweise so ausgebildet, dass es während des Mischvorgangs an dem der Austrittsöffnung entgegenliegenden Ende verschlossen werden kann, so dass die im Mischrohr gemischte Flüssigfarbe das Mischrohr nur durch die Austrittsöffnung verlassen kann. An der Austrittsöffnung kann gegebenenfalls noch ein Druckhalteventil angeordnet sein, um sicherzustellen, dass keine gemischte Flüssigfarbe aus der Austrittsöffnung austritt, so lange keine Flüssigfarben dem Mischer zugeführt werden. Das Mischrohr weist vorzugsweise einen kreisförmigen Querschnitt auf und kann eine zylindrische oder konische Form aufweisen, wobei eine zylindrische Form besonders bevorzugt ist.

In dem Mischrohr ist ein Mischorgan so angeordnet, dass es um die Längsachse des Mischrohres drehbar ist. Das Mischorgan weist dabei mindestens zwei Mischelemente auf, wobei bei gleicher Drehrichtung des Mischorgans ein Teil der Mischelemente den Inhalt des Mischers in Richtung der Austrittsöffnung und ein Teil der Mischelemente den Inhalt des Mischers in entgegengesetzter Richtung bewegen. Durch diese unterschiedliche Wirkung der Mischelemente auf den Inhalt des Mischers wird im Mischer eine Rückvermischung des Inhalts über eine Wirbelbildung bewirkt. Die Mischelemente sind vorzugsweise so dimensioniert, dass bei einer Umdrehung des Mischorgans die Mischelemente durch mindestens 80 % der Querschnittsfläche, besonders bevorzugt mindestens 90 % der Querschnittsfläche des Mischrohrs bewegt werden. Durch eine solche Dimensionierung wird eine Vermischung über den gesamten Querschnitt des Mischrohrs bewirkt. Das Mischorgan wird vorzugsweise so ausgeführt, dass es auswechselbar ist, insbesondere so, dass es unzerlegt aus dem Mischrohr herausgezogen werden kann.

Die Mischelemente des Mischorgans weisen die Form von schraubenförmigen Wendeln mit abwechselnd entgegengesetztem Drehsinn auf, wie sie dem Fachmann von den Mischelementen der Wendelmischer bekannt sind. Ebenso können aber auch andere Formen von Mischelementen verwendet werden, wie zum Beispiel Rührer mit entgegengesetzt angestellten Rührblättern. Das Mischorgan weist vorzugsweise mindestens 5, besonders bevorzugt mindestens 9 Mischelemente mit jeweils unterschiedlicher Wirkung auf den Inhalt des Mischers auf.

Der Antrieb des Mischorgans, der das Mischorgan in Bewegung setzt, kann in beliebiger Weise erfolgen. Vorzugsweise wird das Mischorgan über einen Motor angetrieben. Besonders bevorzugt wird das Mischorgan über eine in der Längsachse des Mischrohrs liegende Welle von dem der Austrittsöffnung entgegenliegenden Ende des Mischrohres her angetrieben. Das Mischorgan kann durch den Antrieb in eine oszillierende oder rotierende Bewegung versetzt werden, wobei eine rotierende Bewegung bevorzugt wird. Wenn mehrere der Mischelemente bis in die Nähe der Wand des Mischrohrs reichen, ist bei einem Antrieb über eine in der Längsachse des Mischrohrs liegende Welle keine zusätzliche Lagerung des Mischorgans im Mischrohr erforderlich.

Der erfindungsgemäße Mischer weist außerdem mindestens zwei Einlassöffnungen für Flüssigfarben auf, die in der zwischen den Enden des Mischrohrs liegenden Wand des Mischrohrs im Bereich des Mischorgans angeordnet sind. Die Flüssigfarben werden dem Mischrohr demnach radial durch die Wand des Mischrohrs zugeführt und nicht axial am Ende des Mischrohrs. Die Einlassöffnungen für Flüssigfarben sind dabei vorzugsweise so angeordnet, dass mindestens 60 % und besonders bevorzugt mehr als 80 % der Länge des Mischorgans zwischen den Einlassöffnungen und der Austrittsöffnung am Ende des Mischrohrs liegt. Vorzugsweise liegen die, Einlassöffnungen für Flüssigfarben in ein bis drei Ebenen und besonders bevorzugt in nur einer Ebene quer zur Längsachse des Mischrohrs. Die Einlassöffnungen können zusätzlich mit Absperrventilen oder Rückschlagventilen versehen sein, um ein Rückströmen von gemischter Flüssigfarbe aus dem Mischer in die zu den Einlassöffnungen führenden Leitungen zu verhindern.

Die Einlassöffnungen für Flüssigfarben und das Mischorgan werden so angeordnet, dass bei der Bewegung des Mischorgans an jeder der Einlassöffnungen mindestens ein Mischelement des Mischorgans in weniger als 1 mm Abstand, insbesondere weniger als 0,5 mm Abstand vorbeigeführt wird. Dadurch wird an den Einlassöffnungen für Flüssigfarben eine hohe Scherkraft erzielt und eine verbesserte Mischung erreicht.

Der erfindungsgemäße Mischer kann zusätzlich noch eine oder mehrere zusätzliche Einlassöffnungen für Spülflüssigkeit und/oder Druckluft aufweisen, vorzugsweise sowohl für Spülflüssigkeit als auch für Druckluft, um den Mischer bei einem Farbwechsel entleeren und reinigen zu können. Zusätzlich kann der Mischer auch noch eine oder mehrere Auslassöffnungen aufweisen, die eine Entleerung unabhängig von der Austrittsöffnung am Ende des Mischrohrs ermöglichen. Die Einlassöffnungen für Spülflüssigkeit und/oder Druckluft und gegebenenfalls zusätzliche Auslassöffnungen sind vorzugsweise radial nahe einem Ende des Mischrohrs oder axial an einem Ende des Mischrohrs angeordnet.

Das erfindungsgemäße Verfahren zum Mischen von Flüssigfarben wird in dem erfindungsgemäßen Mischer durchgeführt. Dabei werden die Flüssigfarben dem Mischer über die Einlassöffnungen für Flüssigfarben zugeführt, während das Mischorgan um die Längsachse des Mischrohres bewegt wird und die gemischte Flüssigfarbe den Mischer über die Austrittsöffnung am Ende des Mischrohrs verlässt. Vorzugsweise bleiben während des Mischvorgangs alle Öffnungen außer den Einlassöffnungen für Flüssigfarben und der Austrittsöffnung am Ende des Mischrohrs geschlossen, so dass die über die Einlassöffnungen zugeführten Flüssigfarben nach dem Mischen das Mischrohr nur über die Austrittsöffnung am Ende des Mischrohrs verlassen können. Insbesondere bleibt während des Mischens das der Austrittsöffnung entgegenliegende Ende des Mischrohrs verschlossen.

Die Bewegung des Mischorgans während der Zuführung der Flüssigfarben kann oszillierend oder rotierend erfolgen, wobei eine rotierende Bewegung bevorzugt wird. Besonders bevorzugt erfolgt eine rotierende Bewegung mit im wesentlichen konstanter Drehzahl. Die Geschwindigkeit der Bewegung des Mischorgans kann vom Fachmann in weiten Grenzen entsprechend der Eigenschaften der zu mischenden Flüssigfarben gewählt werden. Die Geschwindigkeit der Bewegung wird mindestens so hoch gewählt, dass eine gleichmäßige Vermischung erzielt wird. Nach oben hin ist die Geschwindigkeit der Bewegung nur durch das Auftreten von Kavitation an den Mischelementen begrenzt. So lange im Mischer noch Gas, zum Beispiel Luft, enthalten ist wird die Geschwindigkeit der Bewegung vorzugsweise gering gewählt, um ein Einmischen von Gasblasen zu vermeiden und eine blasenfreie Mischung zu erhalten.

Das erfindungsgemäße Verfahren zum Mischen von Flüssigfarben wird vorzugsweise kontinuierlich oder intermittierend durchgeführt. Bei einer kontinuierlichen Durchführung werden die Flüssigfarben in vorgegebenen Volumenverhältnissen zugeführt, so dass ein kontinuierlicher Strom der gemischten Flüssigfarbe den Mischer verlässt. Bei einer intermittierenden Durchführung des Verfahrens werden abwechselnd jeweils in einem ersten Zeitintervall die Flüssigfarben in vorgegebenen Volumenverhältnissen zugeführt, während in einem nachfolgenden zweiten Zeitintervall keine Zufuhr der Flüssigfarben erfolgt. Im intermittierenden Betrieb verlässt nur während des ersten Zeitintervalls gemischte Flüssigfarbe den Mischer, nicht jedoch während des zweiten Zeitintervalls.

Die Zufuhr der Flüssigfarben zu den Einlassöffnungen für Flüssigfarben erfolgt vorzugsweise durch volumetrische Dosierung. Dabei werden die Flüssigfarbe mit vorgegebenen Volumenströmen in vorgegebenen Volumenverhältnissen zugeführt, die sich aus der Rezeptur für die gewünschte Farbe ergeben. Die volumetrische Dosierung erfolgt vorzugsweise durch zwangsfördernde Pumpen, bei denen sich das geförderte Volumen zwangsläufig aus der mechanischen Bewegung der Pumpe ergibt. Geeignete zwangsfördernde Pumpen sind zum Beispiel Kolbenpumpen, Drehkolbenpumpen und Zahnradpumpen. Vorzugsweise werden zur Dosierung der Flüssigfarben Doppelkolbenpumpen verwendet, bei denen abwechselnd einer von zwei Kolben Flüssigfarbe dosiert, während der andere Kolben befüllt wird, so dass ein konstanter Volumenstrom dosiert wird. Durch eine volumetrische Dosierung mit zwangsfördernden Pumpen kann reproduzierbar eine gleichmäßige Zusammensetzung der gemischten Flüssigfarbe erzielt werden, ohne dass Schwankungen in der Regelung der Dosierung zu Farbschwankungen führen. Außerdem kann durch die volumetrische Dosierung der Mengenstrom an gemischter Flüssigfarbe, der den Mischer verlässt, präzise eingestellt werden, so dass mit dem erfindungsgemäßen Verfahren die Flüssigfarbe direkt in eine kunststoffverarbeitenden Maschine dosiert werden kann. Die Dosierung kann dabei kontinuierlich in eine kontinuierlich arbeitende kunststoffverarbeitende Maschine, wie zum Beispiel in einen Extruder, erfolgen. Ebenso kann auch intermittierend in eine diskontinuierlich arbeitende kunststoffverarbeitende Maschine, wie zum Beispiel eine Spritzgießmaschine, dosiert werden.

Vorzugsweise wird die volumetrische Dosierung der Flüssigfarben in den erfindungsgemäßen Mischer durch die kunststoffverarbeitende Maschine angesteuert, so dass ohne Zwischenbehälter direkt in die kunststoffverarbeitende Maschine dosiert werden kann. Die Ansteuerung der Dosierung der Flüssigfarben in den erfindungsgemäßen Mischer durch die kunststoffverarbeitende Maschine wird besonders vorteilhaft für eine Dosierung in diskontinuierlich arbeitende kunststoffverarbeitende Maschinen, wie zum Beispiel Spritzgießmaschinen, verwendet.

Die direkte Dosierung aus dem erfindungsgemäßen Verfahren in eine kunststoffverarbeitenden Maschine ermöglicht einen kurzfristigen Farbwechsel oder eine Veränderung des Farbtons bei der Kunststoffverarbeitung, ohne dass dafür eine Farbmischung vorher bereitgestellt werden muss oder an der kunststoffverarbeitenden Maschine ein Farbbehälter gewechselt werden muss.

Besonders bevorzugt werden zur Dosierung der Flüssigfarben zwangsfördernde Pumpen verwendet, die durch Schrittmotoren angetrieben werden. Solche Pumpen haben gegenüber kontinuierlich angetriebenen Pumpen mit drehzahlvariablem Antrieb den Vorteil eines wesentlich weiteren Bereichs an präzise und konstant einstellbaren Dosierraten. Während bei drehzahlvariablem Antrieb der Bereich von minimaler bis maximaler Dosierrate in der Regel nicht mehr als 1 : 100 beträgt, können mit einem Antrieb durch Schrittmotoren Bereiche von mehr als 1 : 1000 realisiert werden. Damit kann ohne Austausch von Pumpen ein größerer Bereich an Mischungsverhältnissen eingestellt und damit eine größere Anzahl an Farbtönen hergestellt werden. Für die Dosierung der Flüssigfarben eignen sich insbesondere Motorkolbenbüretten, die durch Schrittmotoren angetrieben werden.

Die Zufuhr der Flüssigfarben zu den Einlassöffnungen für Flüssigfarben kann bei dem erfindungsgemäßen Verfahren jeweils kontinuierlich oder getaktet erfolgen. Durch die im Mischrohr erfolgende Rückvermischung kann mit dem erfindungsgemäßen Mischer auch bei einer getakteten Zufuhr einer oder mehrerer Flüssigfarben eine gleichmäßige Mischung ohne zeitliche Schwankungen der Zusammensetzung erzielt werden, wenn das Verhältnis zwischen der mittleren Verweilzeit der gemischten Flüssigfarbe und der Dauer eines Takts im Mischer mehr als 5 : 1, vorzugsweise mehr als 10 : 1, beträgt. Die erfindungsgemäße Dauer eines Takts ist dabei die Summe aus der Dauer eines einzelnen Schritts der Farbzufuhr in den Mischer und der Dauer einer Pause zwischen zwei solchen Schritten der Farbzufuhr. Durch die Möglichkeit einer getakteten Zufuhr können mit dem erfindungsgemäßen Verfahren auch Mischungen mit stark unterschiedlichem Verhältnis der eingesetzten Flüssigfarben reproduzierbar ohne Farbschwankungen hergestellt werden.

Für einen Farbwechsel wird bei dem erfindungsgemäßen Verfahren vorzugsweise der Mischvorgang unterbrochen.und der Mischer mit einer Spülflüssigkeit gereinigt, um möglichst rasch eine gemischte Flüssigfarbe mit geänderter und gleichmäßiger Zusammensetzung zu erhalten und die bei einem Farbwechsel anfallenden Abfallmengen gering zu halten. Dazu wird zunächst die Zufuhr der Flüssigfarben unterbrochen und das Mischrohr durch Zufuhr von Druckluft entleert. Anschließend wird das Mischrohr mindestens einmal mit Spülflüssigkeit gefüllt und das Mischorgan bewegt, um am Mischrohr und am Mischorgan haftende Flüssigfarbe mit der Spülflüssigkeit abzulösen. Danach wird das Mischrohr nochmals durch Zufuhr von Druckluft entleert und anschließend die Zufuhr der Flüssigfarben in einem anderen Verhältnis fortgesetzt. Wenn bei dem erfindungsgemäßen Verfahren die Flüssigfarbe direkt in eine kunststoffverarbeitenden Maschine dosiert wird, wird zweckmäßigerweise während des Reinigungsvorgangs der mit Druckluft entleerte Inhalt des Mischrohrs und ein erster Teil der mit geändertem Verhältnis gemischten Flüssigfarbe einem separaten Sammelbehälter zugeführt, bevor die direkte Dosierung in die kunststoffverarbeitenden Maschine fortgesetzt wird. Als Spülflüssigkeit eignet sich im Prinzip jede Flüssigkeit, die in der Lage ist, die Bestandteile der Flüssigfarbe zu lösen oder zu dispergieren.

Der Spülvorgang wird vorzugsweise so durchgeführt, dass am Ende des Spülvorgangs alle mit dem Mischrohr in Verbindung stehenden Leitungen mit Flüssigkeit gefüllt sind. Durch die Vermeidung von Gaspolstern in Zufuhrleitungen lässt sich bei dem nachfolgenden Mischvorgang ein gleichmäßigerer Strom der gemischten Flüssigfarbe aus dem Mischer erhalten.

Wenn eine Einlassöffnung nicht für die Herstellung der aktuell benötigten Mischung von Flüssigfarben benötigt wird, dann wird vorzugsweise die zu dieser Einlassöffnung führende Zufuhrleitung für Flüssigfarbe nach Beginn der Zufuhr der Flüssigfarben vom Mischrohr her zumindestens teilweise mit gemischter Flüssigfarbe gefüllt. Dies geschieht vorzugsweise, indem eine zur Zufuhr der Flüssigfarbe verwendete Pumpe.kurzzeitig mit umgekehrter Förderrichtung betrieben wird. Durch das zumindest teilweise Füllen der Zufuhrleitung mit bereits gemischter Flüssigfarbe lässt sich vermeiden, dass die aktuell gemischte Flüssigfarbe durch eine unerwünschte Flüssigfarbe aus einer aktuell nicht benötigten Einlassöffnung verunreinigt wird. In einer alternativen Ausführungsform können die Zufuhrleitungen zu nicht benötigten Einlassöffnungen auch während des Spülvorgangs zumindest teilweise mit Spülflüssigkeit gefüllt werden.

Bei dem erfindungsgemäßen Verfahren zum Mischen von Flüssigfarben können zusätzlich zu den mindestens zwei Flüssigfarben auch noch weitere fließfähige Komponenten oder Zubereitungen über die in der Wand des Mischrohrs angeordneten Einlassöffnungen zugeführt werden. Bei der Herstellung von Flüssigfarben zum Einfärben von Kunststoffen können beispielsweise auch noch UV-Stabilisatoren, Antioxidantien, Flammschutzmittel, Weichmacher oder die Schlagzähigkeit verbessernde Additive zugemischt werden, um diese mit der gemischten Flüssigfarbe dem Kunststoff zuzugeben.

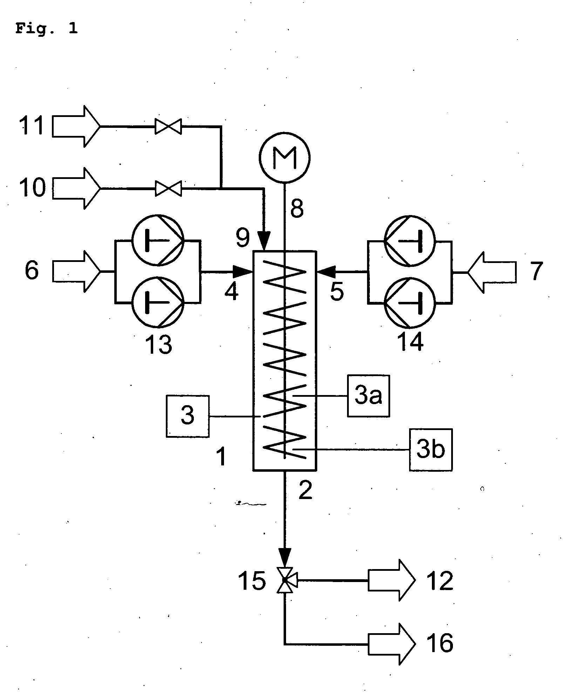

Fig. 1 zeigt eine bevorzugte Ausführungsform des erfindungsgemäßen Mischers mit-Mischelementen in Form von schraubenförmigen Wendeln, zusätzlichen Einlassöffnungen für Spülflüssigkeit und Druckluft, sowie einer Dosierung der Flüssigfarben durch volumetrisch dosierende Doppelkolbenpumpen.

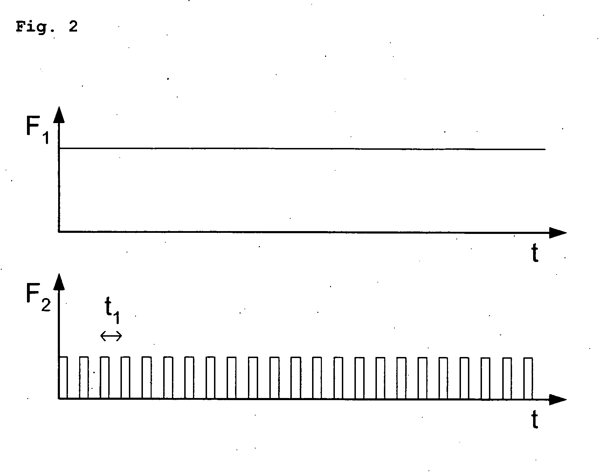

Fig. 2 zeigt den Fluss von Flüssigfarben gegen die Zeit t aufgetragen für einen kontinuierlichen Betrieb des Mischers bei einer kontinuierlichen Dosierung der ersten Flüssigfarbe mit einer Flussrate F₁ und einer getakteten Dosierung der zweiten Flüssigfarbe mit einer Flussrate F₂ und einer Dauer eines Takts von t₁.

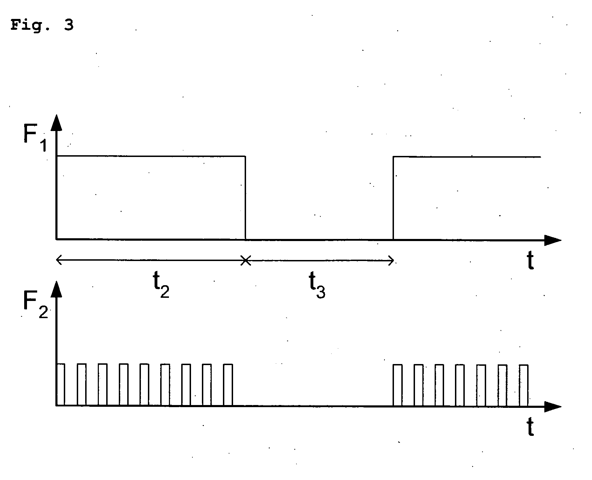

Fig. 3 zeigt den Fluss von Flüssigfarben gegen die Zeit t aufgetragen für einen intermittierenden Betrieb des Mischers bei einer kontinuierlichen Dosierung der ersten Flüssigfarbe mit einer Flussrate F₁ und einer getakteten Dosierung der zweiten Flüssigfarbe mit einer Flussrate F₂. Bei dem intermittierenden Betrieb werden beide Flüssigfarben jeweils für ein erstes Zeitintervall t₂ dosiert und die Dosierung beider Flüssigfarben für ein zweites Zeitintervall t₃ unterbrochen.

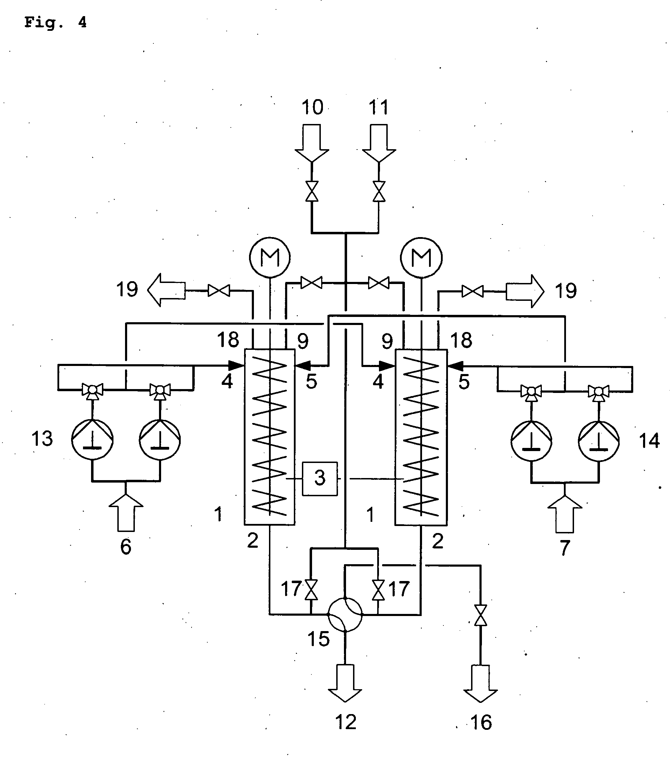

Fig. 4 zeigt eine bevorzugte Ausführungsform des erfindungsgemäßen Mischers mit zwei Mischrohren.

In der Ausführungsform von Fig. 1 umfasst der Mischer ein zylindrisches Mischrohrs ,(1) mit einer Austrittsöffnung (2) am unteren Ende des Mischrohrs (1). Im Mischrohr (1) ist ein Mischorgan (3) um die Längsachse des Mischrohrs (1) drehbar angeordnet, das über eine Welle (8) von einem Motor angetrieben wird. Das Mischorgan (3) weist insgesamt 5 Mischelemente (3a, 3b) in Form von schraubenförmigen Wendeln mit abwechselnd entgegengesetztem Drehsinn auf, die bei einer Umdrehung des Mischorgans (3) durch mehr als 80 % der Querschnittsfläche des Mischrohrs (1) bewegt werden. Bei gleicher Drehrichtung des Mischorgans (3) bewegt ein erster Teil der Mischelemente (3a) den Inhalt des Mischers in Richtung der Austrittsöffnung und ein zweiter Teil der Mischelemente (3b) in entgegengesetzte Richtung. Der Mischer weist außerdem zwei Einlassöffnungen (4, 5) für Flüssigfarben (6, 7) auf, die in der zwischen den Enden des Mischrohrs (1) liegenden Wand des Mischrohrs im Bereich des Mischorgans (3) in einer Ebene quer zur Längsachse des Mischrohrs (1) angeordnet sind, so dass mehr als 60 % der Länge des Mischorgans (3) zwischen den Einlassöffnungen (4, 5) und der Austrittsöffnung (2) am Ende des Mischrohrs (1) liegt. Die Einlassöffnungen (4, 5) für Flüssigfarben (6, 7) und das Mischorgan (3) sind dabei so angeordnet, dass bei der Bewegung des Mischorgans ein Mischelement (3b) in weniger als 0,5 mm Abstand an den Einlassöffnungen (4, 5) vorbeigeführt wird. Der Mischer weist außerdem eine zusätzliche Einlassöffnung (9) für Spülflüssigkeit (10) und Druckluft (11) auf. "

In einer besonders bevorzugten Ausführungsform des erfindungsgemäßen Verfahrens werden zwei Flüssigfarben (6, 7) durch Doppelkolbenpumpen (13, 14) über die Einlassöffnungen (4, 5) für Flüssigfarben (6, 7) dem Mischrohr (1) zugeführt, während das Mischorgan (3) um die Längsachse des Mischrohres (1) rotiert. Das der Austrittsöffnung (2) entgegenliegende Ende des Mischrohrs (1) und die zusätzliche Einlassöffnung (9) bleiben dabei verschlossen, so dass die gesamte über die Einlassöffnungen (4, 5) zugeführte Menge an Flüssigfarben (6, 7) den Mischer als gemischte Flüssigfarbe (12) über die Austrittsöffnung (2) und ein Ventil (15) verlässt. Die Doppelkolbenpumpen (13; 14) werden dabei über Schrittmotoren angetrieben, so dass die Flüssigfarben (6, 7) dem Mischer getaktet zugeführt werden können, wobei das Verhältnis zwischen der Dauer eines Takts und der mittleren Verweilzeit der gemischten Flüssigfarbe im Mischer kleiner als 1 : 10 gewählt wird. Die gemischte Flüssigfarbe (12) wird direkt einer kunststoffverarbeitenden Maschine zugeführt, wobei die volumetrische Dosierung der Flüssigfarben (6, 7) durch die kunststoffverarbetitende Maschine angesteuert wird.

Für einen Farbwechsel wird der in Fig. 1 gezeigte Mischer besonders bevorzugt dadurch gereinigt, dass zunächst die Dosierung der Flüssigfarben (6, 7) gestoppt und das Ventil (15) geschlossen wird, über das die gemischte Flüssigfarbe (12) einer kunststoffverarbeitenden Maschine zugeführt wird. Anschließend wird über die zusätzliche Einlassöffnung (9) Druckluft (11) zugeführt und der Inhalt des Mischrohrs (1) über das Ventil (15) als Abfallstrom (16) in einen Sammelbehälter entleert. Danach wird das Mischrohr (1) bei geschlossenem Ventil (15) über die zusätzliche Einlassöffnung (9) mit einer Spülflüssigkeit (10) vollständig gefüllt, wobei das Mischorgan (3) rotiert und das Mischrohr (1) über eine nicht gezeigte Entlüftungsöffnung am oberen Ende des Mischrohrs (1) entlüftet wird. Nach etwa 30 s, während denen das Mischorgan (3) weiter rotiert, wird über die zusätzliche Einlassöffnung (9) Druckluft (11) zugeführt und der Inhalt des Mischrohrs (1) über das Ventil (15) als Abfallstrom (16) in einen Sammelbehälter entleert. Dieser Spülvorgang wird anschließend noch zweimal wiederholt. Danach wird die Drehzahl des Mischorgans (3) vermindert und die Flüssigfarben (6, 7) werden mit dem neuen Verhältnis dosiert, wobei das Ventil (15) zunächst so geöffnet bleibt, dass die gemischte Flüssigfarbe als Abfallstrom (16) einem Sammelbehälter zugeführt wird. Nachdem eine Menge an Flüssigfarben (6, 7) dosiert ist, die dem Volumen des Mischrohrs (1) entspricht und damit die Luft aus dem Mischrohr (1) verdrängt ist, wird die Drehzahl des Mischorgans (3) wieder auf den ursprünglichen Wert erhöht. Nachdem eine Menge an Flüssigfarben (6, 7) dosiert ist, die dem zwei- bis dreifachen Volumen des Mischrohrs (1) entspricht, wird das Ventil (15) so umgeschaltet, dass die gemischte Flüssigfarbe (12) wieder der kunststoffverarbeitenden Maschine zugeführt wird.

In der Ausführungsform von Fig. 4 umfasst der Mischer zwei Mischrohre (1), die jeweils eine Austrittsöffnung (2), ein Mischorgan (3) und Einlassöffnungen (4, 5) aufweisen. Den Einlassöffnungen (4, 5) werden über Doppelkolbenpumpen (13, 14) Flüssigfarben (6, 7) zugeführt, wobei in jeder der Doppelkolbenpumpen die Kolben unabhängig voneinander angetrieben werden können und über entsprechend angeordnete Ventile aus jedem der beiden Kolben unabhängig voneinander Flüssigfarbe in jedes der beiden Mischrohre dosiert werden kann. Die beiden Mischrohre sind über ein als Vierwegeventil ausgeführtes Ventil (15) so miteinander verbunden, dass wahlweise eines der Mischrohre über eine Leitung mit der Vorrichtung verbunden ist, in die gemischte Flüssigfarbe (12) dosiert wird, während gleichzeitig das andere Mischrohr mit einem Sammelbehälter für den Abfallstrom (16) verbunden ist. Neben den Einlassöffnungen (9) für Spülflüssigkeit (10) weist der Mischer vorzugsweise noch Ventile (17) auf, über die Spülflüssigkeit (10) oder Druckluft (11) auch über die Austrittsöffnung (2) in das Mischrohr (3) geführt werden kann, sowie zusätzliche Auslassöffnungen (18) für Abfallströme (19) an dem der Austrittsöffnung (2) entgegenliegenden Ende des Mischrohrs (3). Die zusätzlichen Ventile (17) und Auslassöffnungen (18) ermöglichen ein Durchspülen des Mischrohrs in beide Richtungen und damit eine wirksamere Reinigung des Mischrohrs für einen Farbwechsel.

Mit der bevorzugten Ausführungsform des Mischers entsprechend Fig. 4 ist es möglich, bei einem Farbwechsel in einem zweiten Mischrohr eine Flüssigfarbe in einem neuen, geänderten Mischverhältnis vorzubereiten, während aus einem ersten Mischrohr noch mit dem alten Mischverhältnis dosiert wird. Dies verkürzt die Unterbrechungsdauer für einen Farbwechsel, da für den Farbwechsel nur noch die vom Ventil (15) zur verbrauchenden Vorrichtung führende Leitung für gemischte Flüssigfarbe (12) gespült oder ausgetauscht werden muss, während die Reinigung des Mischrohrs ohne Unterbrechung der Dosierung von Flüssigfarbe erfolgen kann. Während in das erste Mischrohr Flüssigfarben (6, 7) noch im alten Mischverhältnis dosiert werden und über das Ventil (15) eine gemischte Flüssigfarbe im alten Mischverhältnis erhalten wird, wird das zweite Mischrohr wie oben beschrieben mit Spülflüssigkeit (10) und Druckluft (11) gespült und entleert. Neben der Zuführung von Spülflüssigkeit und Druckluft über die Einlassöffnung (9) und der Entleerung über das Ventil (15) wird vorzugsweise auch zusätzlich in Gegenrichtung gespült durch Zufuhr von Spülflüssigkeit und Druckluft über das Ventil (17) und Entleerung über die Auslassöffnung (18). Anschließend wird das zweite Mischrohr wie oben beschrieben mit Flüssigfarben (6, 7) im neuen Mischverhältnis gefüllt, während die Dosierung von Flüssigfarben in das erste Mischrohr im alten Mischverhältnis fortgesetzt wird. Dazu werden die beiden Kolben einer Doppelkolbenpumpe (13, 14) so betrieben, dass aus einem der Pumpenkolben entsprechend dem alten Mischverhältnis in das erste Mischrohr dosiert wird, während aus dem anderen Pumpenkolben entsprechend dem neuen Mischverhältnis in das zweite Mischrohr dosiert wird. Falls während dieses Vorgangs einer der Pumpenkolben, aus denen in das erste Mischrohr dosiert wird, befüllt werden muss, wird das Befüllen des zweiten Mischrohrs unterbrochen, für die laufende Dosierung auf den zweiten, noch gefüllten Pumpenkolben umgeschaltet, der erste Pumpenkolben gefüllt und anschließend die Befüllung des zweiten Mischrohrs fortgesetzt, so dass die laufende Dosierung in das erste Mischrohr nicht unterbrochen wird. Vorzugsweise wird vor dem Befüllen des zweiten Mischrohrs bei jeder der Doppelkolbenpumpen der gerade nicht zur Dosierung in das erste Mischrohr benötigte Pumpenkolben befüllt, dann bei allen Pumpen auf Dosierung aus dem befüllten Kolben in das erste Mischrohr umgeschaltet, anschließend der jetzt nicht zur Dosierung in das erste Mischrohr benötigte zweite Pumpenkolben ebenfalls befüllt und dann die Befüllung des zweiten Mischrohrs begonnen. Durch diese Vorgehensweise kann in der Regel das Befüllen des zweiten Mischrohrs abgeschlossen werden, bevor für die Dosierung in das erste Mischrohr eine Umschaltung zwischen den Kolben einer Doppelkolbenpumpe erforderlich wird.

### Beispiele

Die Versuche wurden in einem Mischer entsprechend Fig. 1 mit einem Mischrohr (1) mit 8,3 mm Innendurchmesser und 10 cm Länge durchgeführt. Das Mischrohr wies in 8 cm Abstand zur Austrittsöffnung (2) zwei Einlassöffnungen (4, 5) mit jeweils 1,5 mm Durchmesser auf. Als Mischorgan (3) wurde ein Wendelmischer MR 08-12 mit 8 mm Durchmesser und 93 mm Länge der Firma Mixpac eingesetzt, der 12 Mischelemente in Form von schraubenförmigen, jeweils gegenläufigen Wendeln aufwies. Das Mischorgan wurde über einen Motor mit 1500 Umdrehungen pro Minute in Rotation versetzt. Zur Dosierung der Flüssigfarben wurden als Kolbenpumpen (13, 14) Motorbüretten Modell PSD/8 der Firma Hamilton verwendet.

### Beispiel 1

Über zwei unterschiedliche Einlassöffnungen (4, 5) wurden dem Mischer intermittierend eine rote und eine weiße Flüssigfarbe Polytrend 700 der Firma Colortrend im Volumenverhältnis 10 : 9 entsprechend einem Gesamtvolumenstrom von 1,8 ml/min radial zugeführt. Das Zeitintervall für die Zufuhr der Flüssigfarben und das Zeitintervall für die Unterbrechung der Zufuhr betrugen jeweils 10 s. Zur Beurteilung der Mischgüte wurden von der an der Austrittsöffnung (2) erhaltenen gemischten Flüssigfarbe einzelne Tropfen auf einem Mikroskopie-Objektträger dünn ausgezogen und visuell bewertet. In der gemischten Flüssigfarbe ließen sich keine Inhomogenitäten oder Schwankungen des Farbtons feststellen.

### Beispiel 2 (Vergleichsbeispiel)

Beispiel 1 wurde wiederholt, die beiden Flüssigfarben wurden jedoch nicht radial über die Einlassöffnungen (4, 5), sondern axial über Einlassöffnungen in dem der Austrittsöffnung (2) entgegenliegenden Ende des Mischrohrs zugeführt. Die gemischte Flüssigfarbe wies deutlich erkennbare Schwankungen im Farbton auf.

## Patentansprüche

1. Mischer für Flüssigfarben, umfassend
a) ein Mischrohr (1) mit einer Austrittsöffnung (2) am Ende des Mischrohrs,
b) ein im Mischrohr um die Längsachse des Mischrohres drehbar angeordnetes Mischorgan (3) mit mindestens zwei Mischelementen (3a, 3b), und
c) mindestens zwei Einlassöffnungen (4, 5) für Flüssigfarben (6, 7),
**dadurch gekennzeichnet, dass**
die Mischelemente (3a, 3b) des Mischorgans (3) die Form von schraubenförmigen Wendeln mit abwechselnd entgegengesetztem Drehsinn aufweisen und bei gleicher Drehrichtung des Mischorgans ein Teil der Mischelemente (3a) den Inhalt des Mischers in Richtung der Austrittsöffnung und ein Teil der Mischelemente (3b) den Inhalt des Mischers in entgegengesetzter Richtung bewegen und
die Einlassöffnungen (4, 5) in der zwischen den Enden des Mischrohrs liegenden Wand des Mischrohrs im Bereich des Mischorgans angeordnet sind und bei der Bewegung des Mischorgans an jeder der Einlassöffnungen mindestens ein Mischelement (3a, 3b) des Mischorgans (3) in weniger als 1 mm Abstand, vorzugsweise weniger als 0,5 mm Abstand, vorbeigeführt wird.

2. Mischer nach Anspruch 1,
**dadurch gekennzeichnet,**
**dass** das Mischrohr (1) eine zylindrische Form aufweist.

3. Mischer nach einem der vorangehenden Ansprüche,
**dadurch gekennzeichnet,**
**dass** sich die Mischelemente (3a, 3b) des Mischorgans (3) bei einer Umdrehung des Mischorgans durch mindestens 80 % der Querschnittsfläche des Mischrohrs (1) bewegen.

4. Mischer nach einem der vorangehenden Ansprüche,
**dadurch gekennzeichnet,**
**dass** mindestens 60 % der Länge des Mischorgans (3) zwischen den Einlassöffnungen (4, 5) für Flüssigfarben (6, 7) und der Austrittsöffnung (2) am Ende des Mischrohrs (1) liegt.

5. Mischer nach einem der vorangehenden Ansprüche,
**dadurch gekennzeichnet,**
**dass** die Einlassöffnungen (4, 5) für Flüssigfarben (6, 7) in einer Ebene quer zur Längsachse des Mischrohrs (1) liegen.

6. Mischer nach einem der vorangehenden Ansprüche,
**dadurch gekennzeichnet,**
**dass** das Mischorgan (3) über eine in der Längsachse des Mischrohrs (1) liegende Welle (8) von dem der Austrittsöffnung (2) entgegenliegenden Ende des Mischrohrs her angetrieben wird.

7. Mischer nach einem der vorangehenden Ansprüche,
**dadurch gekennzeichnet,**
**dass** er ein oder mehrere zusätzliche Einlassöffnungen (9) für Spülflüssigkeit (10) und Druckluft (11) aufweist.

8. Mischer nach einem der vorangehenden Ansprüche,
**dadurch gekennzeichnet,**
**dass** er zwei Mischrohre (1) aufweist, deren Austrittsöffnungen (2) über ein Ventil (15) mit einer gemeinsamen Leitung für gemischte Flüssigfarbe (12) verbunden sind.

9. Mischer nach Anspruch 8,
**dadurch gekennzeichnet,**
**dass** er mindestens zwei Doppelkolbenpumpen (13, 14) umfasst, wobei aus beiden Kolben einer Doppelkolbenpumpe unabhängig voneinander Flüssigfarbe in jedes der zwei Mischrohre dosiert werden kann.

10. Verfahren zum Mischen von Flüssigfarben,
**dadurch gekennzeichnet,**
**dass** mindestens zwei Flüssigfarben (6, 7) in einem Mischer gemäß einem der Ansprüche 1 bis 9 gemischt werden, wobei die Flüssigfarben dem Mischer über die Einlassöffnungen (4, 5) für Flüssigfarben zugeführt werden, während das Mischorgan (3) um die Längsachse des Mischrohres (1) bewegt wird und die gemischte Flüssigfarbe (12) den Mischer über die Austrittsöffnung (2) am Ende des Mischrohrs verlässt.

11. Verfahren nach Anspruch 10,
**dadurch gekennzeichnet,**
**dass** das Mischorgan (3) um die Längsachse des Mischrohrs (1) rotiert.

12. Verfahren nach Anspruch 10 oder 11,
**dadurch gekennzeichnet,**
**dass** während des Mischens das der Austrittsöffnung (2) entgegenliegende Ende des Mischrohrs (1) verschlossen bleibt.

13. Verfahren nach einem der Ansprüche 10 bis 12,
**dadurch gekennzeichnet,**
**dass** mindestens eine der Flüssigfarben (6, 7) dem Mischer getaktet zugeführt wird, wobei das Verhältnis zwischen der mittlerer Verweilzeit der gemischten Flüssigfarbe im Mischer und der Dauer eines Takts mehr als 5 : 1, vorzugsweise mehr als 10 : 1, beträgt.

14. Verfahren nach Anspruch 13,
**dadurch gekennzeichnet,**
**dass** mindestens eine der Flüssigfarben (6, 7) dem Mischer mit einer Pumpe zugeführt wird, die von einem Schrittmotor angetrieben wird.

15. Verfahren nach einem der Ansprüche 10 bis 14,
**dadurch gekennzeichnet,**
**dass** die Flüssigfarben (6, 7) dem Mischer volumetrisch dosiert zugeführt werden.

16. Verfahren nach Anspruch 15,
**dadurch gekennzeichnet,**
**dass** die volumetrische Dosierung der Flüssigfarben (6, 7) zwangsgefördert, vorzugsweise durch Doppelkolbenpumpen (13, 14), erfolgt.

17. Verfahren nach einem der Ansprüche 10 bis 16,
**dadurch gekennzeichnet,**
**dass** über mindestens eine Einlassöffnung (5) keine Flüssigfarbe zugeführt wird und die zu dieser Einlassöffnung (5) führende Zufuhrleitung nach Beginn der Zufuhr von Flüssigfarben vom Mischrohr her zumindestens teilweise mit gemischter Flüssigfarbe gefüllt wird.

18. Verfahren nach einem der Ansprüche 10 bis 17,
**dadurch gekennzeichnet,**
**dass** für einen Farbwechsel
a) die Zufuhr der Flüssigfarben (6, 7) unterbrochen wird,
b) das Mischrohr (1) durch Zufuhr von Druckluft (11) entleert wird,
c) das Mischrohr mit Spülflüssigkeit (10) gefüllt und das Mischorgan (3) bewegt wird,
d) das Mischrohr (1) durch Zufuhr von Druckluft (11) entleert wird und
e) die Zufuhr der Flüssigfarben (6, 7) in einem anderen Verhältnis fortgesetzt wird.

19. Verfahren nach einem der Ansprüche 10 bis 18
**dadurch gekennzeichnet,**
**dass** ein Mischer mit zwei Mischrohren (1) verwendet wird und mindestens zwei Flüssigfarben (6, 7) einem der Mischrohre zugeführt werden, während im anderen Mischrohr für einen Farbwechsel
a) das Mischrohr durch Zufuhr von Druckluft (11) entleert wird,
b) das Mischrohr mit Spülflüssigkeit (10) gefüllt und das Mischorgan (3) bewegt wird und
c) das Mischrohr durch Zufuhr von Druckluft (11) entleert wird.

20. Verwendung eines Verfahrens nach einem der Ansprüche 15 bis 19 zum Einfärben von Kunststoffen,
**dadurch gekennzeichnet,**
**dass** die gemischte Flüssigfarbe (12) direkt einer kunststoffverarbeitenden Maschine zugeführt wird.

21. Verwendung nach Anspruch 20
**dadurch gekennzeichnet,**
**dass** die volumetrische Dosierung der Flüssigfarben (6, 7) durch die kunststoffverarbeitende Maschine angesteuert wird.

## Claims

1. Mixer for liquid colorants, comprising
a) a mixing pipe (1) having an outlet opening (2) at the end of the mixing pipe,
b) a mixing unit (3), positioned in the mixing pipe so it is rotatable around the longitudinal axis of the mixing pipe, having at least two mixing elements (3a, 3b), and
c) at least two inlet openings (4, 5) for liquid colorants (6, 7),
**characterized in that**
the mixing elements (3a, 3b) of the mixing unit (3) have the form of helical coils having alternating opposite rotational directions and a portion of the mixing elements (3a) moving the contents of the mixer in the direction of the outlet opening and a portion of the mixing elements (3b) moving the contents of the mixer in the opposite direction with identical rotational direction of the mixing unit, and
the inlet openings (4, 5) are positioned in the wall of the mixing pipe between the ends of the mixing pipe in the area of the mixing unit, and during the movement of the mixing unit, at least one mixing element (3a, 3b) of the mixing unit (3) is moved past each of the inlet openings at less than 1 mm distance, preferably less than 0.5 mm distance.

2. Mixer according to Claim 1,
**characterized in that** the mixing pipe (1) has a cylindrical shape.

3. Mixer according to one of the preceding claims,
**characterized in that** the mixing elements (3a, 3b) of the mixing unit (3) move through at least 80 % of the cross-sectional area of the mixing pipe (1) during one rotation of the mixing unit.

4. Mixer according to one of the preceding claims,
**characterized in that** at least 60 % of the length of the mixing unit (3) lies between the inlet openings (4, 5) for liquid colorants (6, 7) and the outlet opening (2) at the end of the mixing pipe (1).

5. Mixer according to one of the preceding claims,
**characterized in that** the inlet openings (4, 5) for liquid colorants (6, 7) lie in one plane transverse to the longitudinal axis of the mixing pipe (1).

6. Mixer according to one of the preceding claims,
**characterized in that** the mixing unit (3) is driven from the end of the mixing pipe opposite the outlet opening (2) via a shaft (8) lying in the longitudinal axis of the mixing pipe (1).

7. Mixer according to one of the preceding claims,
**characterized in that** it has one or more additional inlet openings (9) for flushing liquid (10) and compressed air (11).

8. Mixer according to one of the preceding claims,
**characterized in that** it comprises two mixing pipes (1), whose outlet openings (2) are connected via a valve (15) with a common line for mixed liquid colorant (12).

9. Mixer according to Claim 8,
**characterized in that** it comprises at least two double-piston pumps (13, 14), and liquid colorant can be dosed from both pistons of a double-piston pump independently of each other into either of the two mixing pipes.

10. Method for mixing liquid colorants,
**characterized in that** at least two liquid colorants (6, 7) are mixed in a mixer according to one of Claims 1 to 9, the liquid colorants being supplied to the mixer via the inlet openings (4, 5) for liquid colorants, while the mixing unit (3) is moved around the longitudinal axis of the mixing pipe (1) and the mixed liquid colorant (12) leav the mixer via the outlet opening (2) at the end of the mixing pipe.

11. Method according to Claim 10,
**characterized in that** the mixing unit (3) rotates around the longitudinal axis of the mixing pipe (1).

12. Method according to Claim 10 or 11,
**characterized in that** the end of the mixing pipe (1) opposite the outlet opening (2) remains closed during the mixing.

13. Method according to one of Claims 10 to 12,
**characterized in that** at least one of the liquid colorants (6, 7) is supplied to the mixer in fixed cycles, the ratio between the average hold-up time of the mixed liquid colorant in the mixer and the duration of a fixed cycle being more than 5:1, preferably more than 10:1.

14. Method according to Claim 13,
**characterized in that** at least one of the liquid colorants (6, 7) is supplied to the mixer using a pump which is driven by a stepping motor.

15. Method according to one of Claims 10 to 14,
**characterized in that** the liquid colorants (6, 7) are supplied to the mixer volumetrically dosed.

16. Method according to Claim 15,
**characterized in that** the volumetric dosing of the liquid colorants (6, 7) is performed by forced delivery, preferably by double-piston pumps (13, 14).

17. Method according to one of Claims 10 to 16,
**characterized in that** no liquid colorant is supplied via at least one inlet opening (5) and the supply line leading to this inlet opening (5) is at least partially filled with mixed liquid colorant from the mixing pipe after beginning the supply of liquid colorants.

18. Method according to one of Claims 10 to 17,
**characterized in that,**
for a color change,
a) the supply of the liquid colorants (6, 7) is interrupted,
b) the mixing pipe (1) is emptied by supplying compressed air (11),
c) the mixing pipe is filled with flushing liquid (10) and the mixing unit (3) is moved,
d) the mixing pipe (1) is emptied by supplying compressed air (11), and
e) the supply of the liquid colorants (6, 7) is continued in another ratio.

19. Method according to one of Claims 10 to 18,
**characterized in that** a mixer with two mixing pipes (1) is used and at least two liquid colorants (6, 7) are supplied to one of the mixing pipes, while in the other mixing pipe for a color change,
a) the mixing pipe is emptied by supplying compressed air (11),
b) the mixing pipe is filled with flushing liquid (10) and the mixing unit (3) is moved, and
c) the mixing pipe is emptied by supplying compressed air (11).

20. Use of a method according to one of Claims 15 to 19 for coloring plastics,
**characterized in that** the mixed liquid colorant (12) is supplied directly to a plastic processing machine.

21. Use according to Claim 20,
**characterized in that** the volumetric dosing of the liquid colorants (6, 7) is controlled by the plastic processing machine.

## Revendications

1. Mélangeur pour peintures liquides, comprenant :
a) un tube mélangeur (1), comportant un orifice de sortie (2) à l'extrémité du tube mélangeur,
b) un organe mélangeur (3), disposé dans le tube mélangeur de façon à pouvoir tourner autour de l'axe longitudinal du tube mélangeur, comportant au moins deux éléments mélangeurs (3a, 3b), et
c) au moins deux orifices d'entrée (4, 5) pour les peintures liquides (6, 7),
**caractérisé en ce que** les éléments mélangeurs (3a, 3b) de l'organe mélangeur (3)présentent la forme de spirales hélicoïdales tournant dans des sens alternativement opposés, et, pour un sens de rotation constant de l'organe de mélange, une partie des éléments mélangeurs (3a) déplace le contenu du mélangeur dans la direction de l'orifice de sortie, et une partie des éléments mélangeurs (3b) déplace le contenu du mélangeur dans la direction opposée, et
les orifices d'entrée (4, 5) sont disposés dans la paroi du tube mélangeur, située entre les extrémités du tube mélangeur, dans la zone de l'organe mélangeur, un élément mélangeur (3a, 3b) de l'organe mélangeur (3) passant, lors du déplacement de l'organe mélangeur, à moins de 1 mm de distance, de préférence à moins de 0,5 mm de distance de chacun des orifices d'entrée.

2. Mélangeur selon la revendication 1, **caractérisé en ce que** le tube mélangeur (1) a une forme cylindrique.

3. Mélangeur selon l'une des revendications précédentes, **caractérisé en ce que** les éléments mélangeurs (3a, 3b) de l'organe mélangeur (3) se déplacent, lors d'une rotation de l'organe mélangeur, sur au moins 80 % de l'aire en section transversale du tube mélangeur (1).

4. Mélangeur selon l'une des revendications précédentes, **caractérisé en ce qu'**au moins 60 % de la longueur de l'organe mélangeur (3) se trouvent entre les orifices d'entrée (4, 5) des peintures liquides (6, 7) et l'orifice de sortie (2) à l'extrémité du tube mélangeur (1).

5. Mélangeur selon l'une des revendications précédentes, **caractérisé en ce que** les orifices d'entrée (4, 5) des peintures liquides (6, 7) se trouvent dans un plan perpendiculaire à l'axe longitudinal du tube mélangeur (1).

6. Mélangeur selon l'une des revendications précédentes, **caractérisé en ce que** l'organe mélangeur (3) est entraîné, à partir de l'extrémité du tube mélangeur opposée à l'orifice de sortie (2), par un arbre (8) situé sur l'axe longitudinal du tube mélangeur (1).

7. Mélangeur selon l'une des revendications précédentes, **caractérisé en ce qu'**il présente un ou plusieurs orifices d'entrée supplémentaires (9) pour un liquide de rinçage (10) et pour de l'air comprimé (11).

8. Mélangeur selon l'une des revendications précédentes, **caractérisé en ce qu'**il comprend deux tubes mélangeurs (1), dont les orifices de sortie (2) sont reliés par l'intermédiaire d'une vanne (15) à une conduite commune destinée à la peinture liquide (12) mélangée.

9. Mélangeur selon la revendication 8, **caractérisé en ce qu'**il comprend au moins deux pompes (13, 14) à double piston, de l'encre liquide pouvant, à partir des deux pistons d'une pompe à double piston et d'une manière indépendante, être dosée dans chacun des deux tubes mélangeurs.

10. Procédé pour mélanger des peintures liquides, **caractérisé en ce qu'**on mélange au moins deux peintures liquides (6, 7) dans un mélangeur selon l'une des revendications 1 à 9, les peintures liquides étant envoyées au mélangeur par les orifices d'entrée (4, 5) destinés aux peintures liquides, tandis que l'organe mélangeur (3) se déplace autour de l'axe longitudinal du tube mélangeur (1), et la peinture liquide (12) mélangée quitte le mélangeur par l'orifice de sortie (2) à l'extrémité du tube mélangeur.

11. Procédé selon la revendication 10, **caractérisé en ce que** l'organe mélangeur (3) tourne autour de l'axe longitudinal du tube mélangeur (1).

12. Procédé selon la revendication 10 ou 11, **caractérisé en ce que,** pendant le mélange, l'extrémité du tube mélangeur (1) opposée à l'orifice de sortie (2) reste obturée.

13. Procédé selon l'une des revendications 10 à 12, **caractérisé en ce qu'**au moins l'une des peintures liquides (6, 7) est envoyée d'une manière cadencée au mélangeur, le rapport entre le temps de séjour moyen de la peinture liquide mélangée dans le mélange et la durée d'une cadence étant supérieur à 5:1, de préférence supérieur à 10:1.

14. Procédé selon la revendication 13, **caractérisé en ce qu'**au moins l'une des peintures liquides (6, 7) est envoyée au mélangeur à l'aide d'une pompe qui est commandée par un moteur pas-à-pas.

15. Procédé selon l'une des revendications 10 à 14, **caractérisé en ce que** les peintures liquides (6, 7) sont envoyées au mélangeur selon un dosage volumétrique.

16. Procédé selon la revendication 15, **caractérisé en ce que** le dosage volumétrique des peintures liquides (6, 7) s'effectue par un refoulement forcé, de préférence grâce aux pompes à double piston (13, 14).

17. Procédé selon l'une des revendications 10 à 16, **caractérisé en ce qu'**aucune peinture liquide n'est amenée par au moins un orifice de sortie (5), et la conduite d'amenée conduisant à cet orifice d'entrée (5) est, après le début de l'amenée de peintures liquides à partir du tube mélangeur, remplie au moins partiellement de peinture liquide mélangée.

18. Procédé selon l'une des revendications 10 à 17, **caractérisé en ce que,** pour un changement de couleur,
a) on interrompt l'amenée des peintures liquides (6, 7),
b) on vide le tube mélangeur (1) par amenée d'air comprimé (11),
c) on remplit le tube mélangeur de liquide de rinçage (10), et on déplace l'organe mélangeur (3),
d) on vide le tube mélangeur (1) par amenée d'air comprimé (11), et
e) on poursuit l'amenée des peintures liquides (6, 7) dans un autre récipient.

19. Procédé selon l'une des revendications 10 à 18, **caractérisé en ce qu'**on utilise un mélangeur comportant deux tubes mélangeurs (1), et que l'on amène au moins deux peintures liquides (6, 7) à l'un des tubes mélangeurs, tandis que, dans l'autre tube mélangeur, et pour un changement de couleur,
a) on vide le tube mélangeur par apport d'air comprimé (11),
b) on remplit le tube mélangeur de liquide de rinçage (10) et on déplace l'organe mélangeur (3), et
c) on vide le tube mélangeur par apport d'air comprimé (11).

20. Utilisation d'un procédé selon l'une des revendications 15 à 19 pour colorer dans la masse des matières plastiques, **caractérisée en ce que** la peinture liquide mélangée (12) est directement amenée à une machine de transformation de matières plastiques.

21. Utilisation selon la revendication 20, **caractérisée en ce que** le dosage volumétrique des peintures liquides (6, 7) est déclenché par la machine de transformation de matières plastiques.
